# EUROPÄISCHE PATENTSCHRIFT

(11) **EP 2 895 639 B1**
(45) Veröffentlichungstag und Bekanntmachung des Hinweises auf die Patenterteilung: **06.07.2016**
(21) Anmeldenummer: 13762430.0
(22) Anmeldetag: 09.09.2013
(51) Int. Cl.: C23C 4/06, C23C 4/067, C23C 4/129, F16J 9/26, F16J 9/28, C22C 27/06, C22C 30/00

(54) **VERSCHLEISSSCHUTZSCHICHT FÜR KOLBENRINGE**
WEAR-PROTECTION LAYER FOR PISTON RINGS
COUCHE DE PROTECTION CONTRE L'USURE POUR SEGMENTS DE PISTON

(30) Priorität: 14.09.2012 DE 102012018276
(43) Veröffentlichungstag der Anmeldung: 22.07.2015
(73) Patentinhaber: Federal-Mogul Burscheid GmbH, 51399 Burscheid (DE)
(72) Erfinder: KENNEDY, Marcus, 40479 Düsseldorf (DE); ZINNABOLD, Michael, 51399 Burscheid (DE)
(74) Vertreter: Becker Kurig Straus
(86) Internationale Anmeldenummer: PCT/EP2013/068568
(87) Internationale Veröffentlichungsnummer: WO 2014/040940

(56) Entgegenhaltungen:
- DE-A1- 10 163 933
- DE-A1-102009 031 375
- DE-A1-102010 038 289
- DE-B3-102008 032 042
- DE-B3-102009 016 650

## Beschreibung

Die vorliegende Erfindung betrifft eine verbesserte Verschleißschutzschicht für Kolbenringe von Verbrennungskraftmaschinen und ein Verfahren zum Auftragen einer derartigen Verschleissschutzschicht bei Herstellung von Kolbenringen.

### Stand der Technik

Kolbenringe sind Dichtelemente auf dem Kolben, beispielsweise eines Verbrennungskraftmotors oder eines Kolbenverdichters. In einem Verbrennungskraftmotor dichten Kolbenringe den zwischen Kolbenkopf und Zylinderwand vorhandenen Spalt gegenüber dem Brennraum ab. In heutigen Kraftmotoren werden im Allgemeinen jeweils drei Kolbenringe pro Zylinder eingesetzt, deren Ausführung sich je nach Einbaulage unterscheidet. Die Hauptaufgabe des dem Verbrennungsraum am nächsten gelegenen Kolbenring, des sog. Kompressionsrings, besteht darin abzudichten und Wärme ableiten. Der unterste Ring, der sog. Ölabstreifring, streift Schmieröl von der Zylinderwand ab und dosiert dabei den Ölfilm, auf dem die oberen Kolbenringe während des Hubes gleiten. Der mittlere Ring spielt bei der Steuerung des Ölhaushaltes eine rolle und dichtet weiter gegen Verbrennungsgase ab.

Bei der auf und ab Bewegung des Kolbens gleitet der Kolbenring einerseits mit seiner äußeren Umfangsfläche in ständiger federnder Anlage gegen die Zylinderwand, andererseits gleitet der Kolbenring, bedingt durch die Kippbewegungen des Kolbens, oszillierend in seiner Kolbenringnut, wobei seine Flanken wechselnd an der oberen oder unteren Nutenflanke der Kolbenringnut anliegen. Bei den jeweils gegeneinander laufenden Gleitpartnern tritt in Abhängigkeit des Materials ein mehr oder weniger starker Verschleiß auf, der bei einem Trockenlauf zu so genannten Fressern, Riefenbildung und schließlich zu einer Zerstörung des Motors führen kann.

Zur Herstellung hoch beanspruchter Teile von Verbrennungskraftmotoren, wie beispielsweise den genannten Kolbenringen, werden meist Gusseisenwerkstoffe bzw. Gusseisenlegierungen verwendet. Kolbenringe, insbesondere Kompressionsringe, unterliegen in hoch beanspruchten Verbrennungsmotoren wie beispielsweise 4-Takt und 2-Takt Motoren einer zunehmenden Belastung. Unter anderem wirken ein hoher Kompressionsspitzendruck, eine hohe Verbrennungstemperatur und eine Schmierfilmreduzierung, auf den Kolbenring, die die Funktionseigenschaften wie Verschleiß, Brandspurbeständigkeit, Microwelding und Korrosionswiderstand maßgeblich beeinflussen.

Höhere Zünddrücke, reduzierte Emissionen sowie die Kraftstoff-Direkteinspritzung stellen weiter steigende Belastungen für Kolbenringe dar. Die Folge können Beschädigungen und Aufplattierungen von Kolbenmaterial vor allem auf der unteren Kolbenringflanke sein.

Aufgrund der höheren mechanischen und dynamischen Beanspruchungen von Kolbenringen fordern immer mehr Motorenhersteller Kolbenringe aus hochwertigem Stahl (vergütet und hochlegiert, wie beispielsweise Werkstoff 1.4112). Stahlwerkstoffe besitzen gegenüber Gusseisen bessere Festigkeits- und Zähigkeitseigenschaften, da keine Störung durch freien Graphit im Grundgefüge vorhanden ist. Meist werden hochchromlegierte martensitische Stähle für die Herstellung von Stahlkolbenringen eingesetzt.

Um das Verhalten von Kolbenringen im Betrieb weiter zu verbessern, werden diese einerseits einer Oberflächenbehandlung unterzogen, wie beispielsweise Auftragen von Zinn- und Kupferschichten zur Erhöhung der Gleitfähigkeit, Auftragen von Zink- bzw. Manganphosphatschichten für ein beschleunigtes Einlaufverhalten und Brünieren zur Verringerung der Korrosion.

Andererseits werden auch gezielt die Laufflächen zur Erhöhung der Eigenverschleissbeständigkeit bzw. Verringerung der Abrasions- und Adhäsionsverschleißes behandelt, wie durch Chromieren, Auftragen von Metall-Keramik-Verbundschichten oder Molybdänschichten oder durch Nitrieren bzw. Nitrocarburieren. Eine im Handel erwerbbare Kolbenringbeschichtung ist unter dem Produktnamen MKP200 bekannt und enthält ein Komposit aus Molybdän und Cr₂C₃-NiCr.

Kolbenringe mit derartigen Beschichtungen weisen allerdings immer noch einen zu geringen Verschleiß-, Brandspur- und Korrosionswiderstand auf, dies insbesondere im Hinblick auf zukünftige Motorgenerationen mit erhöhten Betriebsbelastungen. Eine Ursache dafür liegt unter Anderem in der hohen Porosität der Schutzschichten von ungefähr 10-15 %, sowie in einer Limitierung des Anteils an verschleißresistenten Anteilen in der Schicht aufgrund des verwendeten Aufspritzverfahrens.

Ein weiteres Problem besteht darin, dass Kolbenringe großvolumiger Motoren, mit beispielsweise Zylinderdurchmessern von ca. 190 mm bis über 1000 mm für die Gewährleistung der gewünschten Lebensdauer von zu ca. 30.000 Std. ausreichend dicke Schichten auf den Kolbenringen erfordern. Mit steigender Dicke der Beschichtung tritt jedoch die mit den unterschiedlichen Ausdehnungskoeffizienten der jeweiligen im Kolbenring und der Beschichtung verwendeten Materialien und der unterschiedlichen thermischen Leitfähigkeit einhergehende Problematik in den Vordergrund.

Um den Verschleiß, insbesondere auch das Kolbenringspiel in der Kolbennut, zu verringern werden hoch verschleissresistente Schichtsysteme benötigt, die hinsichtlich Härte, E-Modul, Scherfestigkeit, thermischer Beständigkeit, Herstellbarkeit und Kosten ausgewogen gute Eigenschaften aufweisen.

Eine Aufgabe der vorliegenden Erfindung besteht daher darin eine verbesserten Verschleißschutzschicht sowie eine Beschichtungsverfahren bereitzustellen, mit der/dem die Verschleisseigenschaften von Kolbenringen weiter verbessert werden kann.

### Beschreibung der Erfindung

Diese Aufgabe wird erfindungsgemäß durch eine Verschleißschutzschicht gelöst, die die folgenden Elemente in den angegebenen Anteilen umfasst:
15-25 Gew.-% Fe, 10-20 Gew.-% W, 20 -30 Gew.-% Cr, 15 -25 Gew.-% Ni, 1-5 Gew.-% Mo, 0,1-0,5 Gew.-% P, 0,01-0,1 Gew.-% B, 0,1 -5 Gew.-% C, 0,1 -2 Gew.-% Si.

Aufgrund des Anteils von Eisen und Nickel in der Zusammensetzung und der Schicht von mindestens 30 % entsteht ein quasi-homogenes System zwischen Substrat und Beschichtung, wodurch die während der Mischreibung, insbesondere im OT- oder UT-Bereich, entstehende thermische Energie besser abgeführt und ein gleichmäßiger thermischer Relaxationsprozess durch die im Motor vorliegenden Temperaturschwankungen gewährleistet wird. Die Verschleißschutzschicht weist daher ausgezeichnete Wärmeleitfähigkeit auf und nur einen minimal unterschiedlichen thermischen Ausdehnungskoeffizient gegenüber dem Kolbenring selbst. Die Anwendung von Fe-Basis Legierungen als Kolbenringbasisbeschichtungsmaterial zusammen mit Molybdän und Ni-Cr-P-Si-B-Verbindung und einem karbidischen System, resultiert in der Herstellung eines neuen Kolbenringtyps.

In den Figuren
Fig. 1 zeigt die Mikrostruktur der Variante TS-V1 gemessen mittels REM;
Fig. 2 zeigt die Mikrostruktur der Variante TS-V2 gemessen mittels REM;
Fig. 3 zeigt, dass eine Erhöhung der Phase 1 von TS-V2 zu einer Erhöhung der Karbidkonzentration führt;
Fig. 4 zeigt den Ring- und Zylinderlaufbahnverschleiß nach aussermotorischen Prüfung im System Ring/Zylinder geschmiert;
Fig. 5 zeigt die ermittelten Werte für die Brandspurbeständigkeit der Varianten TS-V1 und TS-V2.

Die erfindungsgemäße Schicht umfasst grundsätzlich Eisen (Fe), Wolfram (W, als WC), Chrom (Cr, als Cr und Cr₂C₃), Nickel (Ni), Phosphor, Bor (B), Molybdän, Silizium (Si) und Kohlenstoff (C, teilweise gebunden in Fe, W und Cr als Karbid).

Eisen (Fe) ist in einer Menge von 15-25 Gew.-% enthalten, vorzugsweise in einer Menge von 17 - 25 Gew.-%, mehr bevorzugt 18 - 25 Gew.-%, noch mehr bevorzugt 20 - 25 Gew.-%, und weiter bevorzugt 22 - 25 Gew.-%.

Wolfram (W) ist in einer Menge von 10 - 20 Gew.-% enthalten, vorzugsweise in einer Menge von 12 - 20 Gew.-%, mehr bevorzugt 14 - 20 Gew.-%, noch mehr bevorzugt 16 - 20 Gew.-%, und weiter bevorzugt 18- 20 Gew.-%.

Chrom (Cr) ist in einer Menge von 20 - 30 Gew.-% enthalten, vorzugsweise in einer Menge von 22 - 30 Gew.-%, mehr bevorzugt 24 - 30 Gew.-%, noch mehr bevorzugt 26 - 30 %, und weiter bevorzugt 28- 30 Gew.-%.

Nickel (Ni) ist in einer Menge von 15-25 Gew.-% enthalten, vorzugsweise in einer Menge von 17 - 25 Gew.-%, mehr bevorzugt 18 - 25 Gew.-%, noch mehr bevorzugt 20 - 25 %, und weiter bevorzugt 22- 25 Gew.-% .

Phosphor (P) ist in einer Menge von 1-5 Gew.-% enthalten, vorzugsweise in einer Menge von 2- 5 Gew.-%, mehr bevorzugt 3 - 5 Gew.-%, noch mehr bevorzugt 4 - 5 %.

Bor (B) ist ist in einer Menge von 0,01-0,1 Gew.-% enthalten, vorzugsweise in einer Menge von 0,02 - 0,08 Gew.-%, mehr bevorzugt 0,03 - 0,05 Gew.-%, noch mehr bevorzugt 0,04 - 0,05 %.

Kohlenstoff (C) ist in einer Menge von 0,1 - 5 Gew.-% enthalten, vorzugsweise in einer Menge von 0,5 - 5 Gew.-%, mehr bevorzugt 1 - 5 Gew.-%, noch mehr bevorzugt 1 - 2 Gew.-%.

Molybdän ist in einer Menge von 1 - 5 Gew.-% enthalten, vorzugsweise in einer Menge von 2 - 5 Gew.-%, mehr bevorzugt 2 - 4 Gew.-%, noch mehr bevorzugt 2 - 3 Gew.-%.

Silizium (Si) ist in einer Menge von 0,1 - 2 Gew.-% enthalten, vorzugsweise in einer Menge von 0,5 - 2 Gew.-%, mehr bevorzugt 1 - 2 Gew.-%, noch mehr bevorzugt 1,5 - 2 %.

Optional kann in der erfindungsgemäßen Verschleißschutzschicht Niob (Nb) und Sauerstoff (O) vorhanden sein.

Niob (Nb) kann in einer Menge von 10 - 15 Gew.-% enthalten sein, vorzugsweise in einer Menge von 11 - 15 Gew.-%, mehr bevorzugt 12 - 15 Gew.-%, noch mehr bevorzugt 13 - 15 Gew.-%, und weiter bevorzugt 14- 15 Gew.-%.

Sauerstoff kann in einer Menge von 0,1 - 2 Gew.-% enthalten sein, vorzugsweise in einer Menge von 0,1 - 0,8 Gew.-%, mehr bevorzugt 0,2 - 0,5 Gew.-%, noch mehr bevorzugt 0,3 - 0,5 Gew.-%, und weiter bevorzugt 0,4- 0,5 Gew.-%.

Es sollte klar sein dass die vorstehend ausgeführten Bereiche in jedweder gewünschten Kombination permutiert werden können.

Die vorstehend aufgeführten Elemente Fe, W, Cr und Nb können als solche oder in Form Ihrer Carbide vorliegen. Der Anteil an Carbiden kann von 20 - 50 Gew.-% betragen, vorzugsweise 25 - 50 Gew.-%, weiter bevorzugt 30 - 50 Gew.-%, weiter 35 - 45 Gew.-%.

Dabei kann der Anteil an WC im Bereich von 10 - 20 Gew.-%, der Anteil an Cr₂C₃ im Bereich von 10 - 25 Gew.-% und der Anteil an NbC im Bereich von 5 - 15 Gew.-%.

Die bevorzugten Bereiche für WC sind von 12 - 20 Gew.-%, vorzugsweise von 15 - 20 Gew.-%, mehr bevorzugt von 15 - 18 Gew.-%. Die bevorzugten Bereiche für Cr₂C₃ sind von 12 - 23 Gew.-%, vorzugsweise von 15 - 20 Gew.-%, mehr bevorzugt von 18 - 20 Gew.-%. Die bevorzugten Bereiche für NbC sind von 7 - 15 Gew.-%, vorzugsweise von 9 - 15 Gew.-%, mehr bevorzugt von 10 - 12 Gew.-%.

Es sollte klar sein, dass wie bei den vorstehend aufgeführten Bereichen für die Elemente selbst jedwede Permutation der bevorzugten Bereiche, auch in Verbindung mit den bevorzugten Bereichen der Elemente selbst hiermit offenbart ist.

Es wurde gefunden, dass bei der erfindungsgemäßen Zusammensetzung/Beschichtung die Verwendung von Karbiden den Brandspur- und Verschleißwiderstand weiter erhöht. Daneben führt die Verwendung von Nickel in den angegebenen Bereichen und in Kombination mit den anderen Elementen in den angegebenen Bereichen führt zu einer Verbesserung der Scherfestigkeit und des elastischen Verhaltens, was den Kolbenring insbesondere bei seiner Bewegung in der Kolbennut ausdauernder macht.

Die Verschleißschutzschicht kann mit jedem geeigneten Verfahren auf das Substrat aufgebracht werden, wobei vorzugsweise ein thermischer Spritzprozess eingesetzt wird. Besonders bevorzugt ist hier das HVOF Verfahren (High-Velocity-Oxygen-Fuel-Verfahren), d.h. ein Hochgeschwindigkeits-Flammspritzverfahren. Die zur Herstellung der Verschleißschutzschicht zu verwendenden Inhaltsstoffe werden dabei als Pulvermaterialien eingesetzt. Die Anwendung des HVOF Verfahrens ergibt eine besonders dichte thermische Beschichtung auf dem zu beschichtenden Substrat mit besonders geringer Porosität

Die Partikelgrößen der verwendeten Pulver liegen im Allgemeinen im Bereich von 1 - 80 µm, vorzugsweise im bereich von 5 - 60 µm, mehr bevorzugt im Bereich von 10 - 50 µm. Die einzelnen Karbide weisen vorzugsweise eine Partikelgröße von 0,1-5 µm, vorzugsweise eine Größe im Bereich von 1 - 4 µm auf und können in einer NiCr-Matrix eingebettet sein. Die Karbide können dabei entweder über agglomerierte und gesinterte Partikel oder als primär ausgeschiedene Karbide vorliegen.

Die Anwendung der erfindungsgemäßen Eisenbasislegierung als Kolbenringbasisbeschichtungsmaterial zusammen mit Molybdän und Wolframkarbid als Verschleißschutzschicht führt daher zu einem neuen Kolbenringtyp mit verbesserten Eigenschaften in Bezug auf Verschleiß-, Brandspur- und Korrosionswiderstand.

Die vorliegende Erfindung stellt weiter einen mit der Verschleißschutzschicht beschichteten Kolbenring bereit. Der zu beschichtende Kolbenring kann dabei jeglicher Kolbenringtyp sein, ein Kompressionsring, ein Ölabstreifring oder der mittlere Ring, gefertigt aus entweder Gusseisen oder Stahl. Der Kolbenring wird vorzugsweise mittels eines thermisches Spritzprozesses, bevorzugt dem HVOF-Verfahren mit der Verschleißschutzschicht beschichtet.

Die Dicke der Beschichtung kann sich im Bereich von 20 - 1500 µm bewegen, vorzugsweise im Bereich von 20 bis 1000 µm, weiter bevorzugt 20 - 800 µm.

Die Härte der Beschichtung eines Kolbenringes beschichtet mit der erfindungsgemäßen Verschleißschutzschicht kann von 550 - 950 HV 1 (Härteprüfung nach Vickers) betragen.

Derartige beschichtete Kolbenringe finden vor allem in Verbrennungskraftmaschinen Verwendung. Dabei bedingen die bei einer derartigen Verwendung vorkommenden schwefelhaltigen Öle eine Reaktion des Molybdäns in der Verschleißschutzschicht des Kolbenrings mit dem Schwefel zu MoS₂, das wiederum aufgrund seiner Kristallstruktur ein ausgezeichneter Festschmierstoff ist. Durch diese Reaktion wird die Brandspur- oder Fressneigung des tribologischen Systems verbessert. MoS₂ besitzt ein typisches Schichtgitter, das aus einer Anordnung von Schwefel-Metall-Schwefel-Ebenen parallel zur hexagonalen Basisebene (001) besteht. Innerhalb dieser Ebenen existieren starke kovalente Bindungen. Jedoch sind die Ebenen nur durch schwache van-der-Waals Wechselwirkungen miteinander verbunden. Diese grafitähnliche anisotrope Schichtstruktur bestimmt die geringe Materialhärte und die ausgezeichnete Spaltbarkeit entlang der (001)-Ebenen mit der Folge, dass ausgezeichnete Notlaufeigenschaften erreicht werden.

Die folgenden Beispiele erläutern die Erfindung und sind nicht dazu gedacht diese zu begrenzen.

### Beispiele

### I. Verschleißschutzschichten

Die folgenden Verschleißschutzschicht-Varianten wurden hergestellt und miteinander verglichen:
- TS-V1:: Ein Komposit aus Mo und Cr₂C₃-NiCr (MKP200, im Handel erhältliches Serienprodukt von Federal-Mogul) als Referenz, hergestellt mittels Plasmaspritzen
- TS-V2:: Ein 4-phasiges Gemisch
Phase 1: FeCr-Basis+WC/Cr₂C₃-NiCr;
Phase 2: Ni-Cr-P-Si-B -Verbindung;
Phase 3: Molybdän;
Phase 4: NbC
mit dem Mischungsverhältnis von 70/10/10/10
hergestellt mittels HVOF

### II. Durchgeführt Versuche

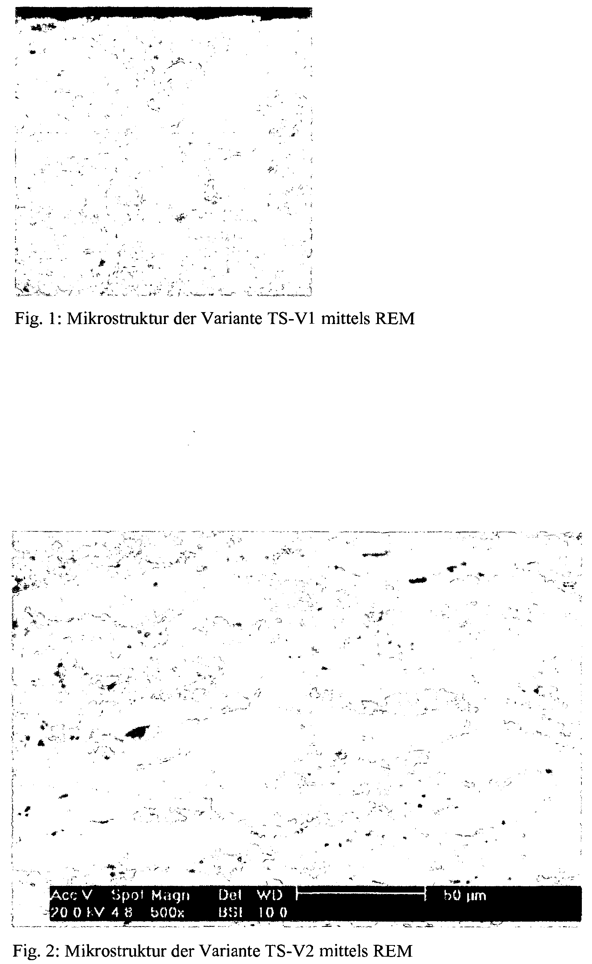

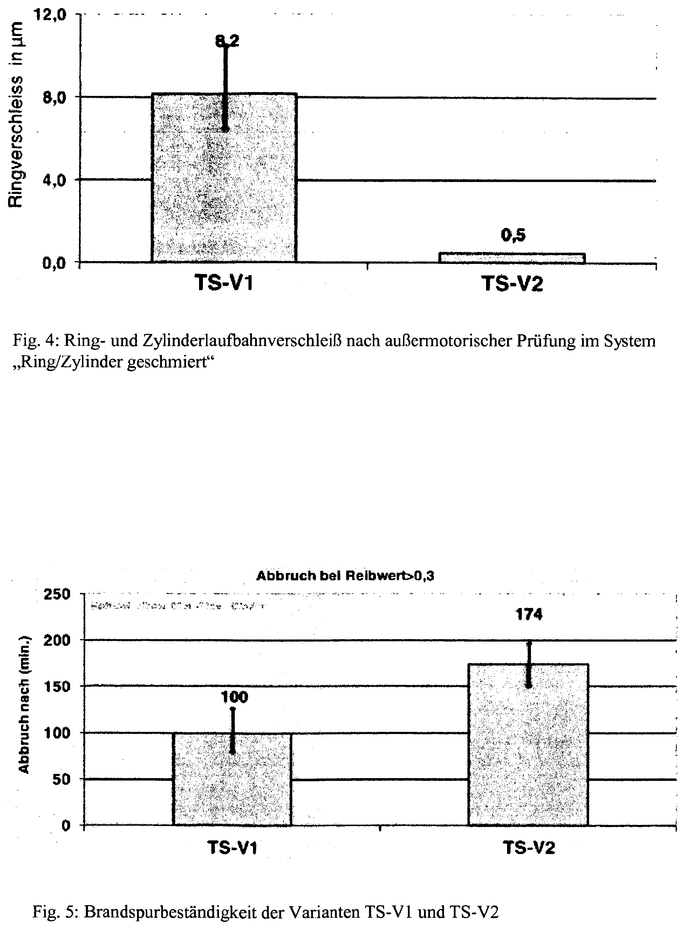

Die TS-V2 Schicht wurde hinsichtlich der chemischen Zusammensetzung (Tab. 1), Porösität und Härte (Tab. 2), Mikrostruktur (Abb. 1-3), sowie hinsichtlich des Verschleiß- und Brandspurverhalten untersucht (Abb. 4 und 5).

Die Tabelle 1 zeigt die chemische Zusammensetzung des im Test verwendeten Schichtsystems (3 Messungen V2a bis V2c).

**Tabelle 1**

| Chemische Zusammensetzung der im Test verwendeten Verschleißschutzschichten. | | | | | | | | | | |
|---|---|---|---|---|---|---|---|---|---|---|
| **Chemische Zusammensetzung** | | | | | | | | | | |
| **Fe** | **W** | **Cr** | **Ni** | **Nb** | **Mo** | **C** | **Si** | **P** | **O** | **B** |
| **(Gew%)** | | | | | | | | | | |
| 22,9 | 13,8 | 25,5 | 21,6 | 12,7 | 2,7 | 1,0 | 0,5 | 0,3 | 1,0 | 0,05 |
| 22,0 | 12,0 | 25,7 | 22,5 | 12,8 | 3,7 | 1,2 | 0,8 | 0,3 | 1,0 | 0,07 |
| 23,6 | 13,2 | 25,1 | 22,1 | 11,8 | 3,0 | 1,4 | 0,6 | 0,3 | 1,1 | 0,06 |

Für die Varianten wurden weiter gemäß herkömmlicher Methoden die Mikrostruktur, die Porosität und Härte, sowie das Verschleiß- und das Brandspurverhalten geprüft. In der Tabelle 2 sind die ermittelten Werte gezeigt.

**Tabelle 2**

| Ermittelte Werte hinsichtlich Porosität und mechanischer Eigenschaften | | | |
|---|---|---|---|
| Versuch | Karbidanteil Soll | Härte | Porosität |
| # | (Gew%) | HV1 | % |
| TS-V1 | 20 | 390-660 | 9 |
| TS-V2 | 30 | 764-888 | 1 |

Daraus wird ersichtlich, dass die Porosität der erfindungsgemäßen Schichten im Vergleich zu der Vergleichsschicht stark reduziert ist, und dass eine Erhöhung der Karbidkonzentration zu einer Erhöhung der Härte der Verschleißschutzschicht führt.

Mittels Rasterelektronenmikroskopie wurde weiter die Mikrostruktur und die Phasenverteilung untersucht (Fig. 1). Daraus wird ersichtlich, dass die Variante I zeigt keine aufgeschmolzenen Partikel, homogen verteilte Cr₂C₃Bereiche zusammen mit Molybdän in einer NickelChrom Matrix. Porositätsuntersuchungen zeigten eine Porosität von maximal 10%.

Aus der Fig. 2 ist ersichtlich, dass bei der erfindungsgemäßen Variante TS-V2 die Karbide homogen verteilt sind, wenige teilweise aufgeschmolzene Partikel vorhanden sind, Molybdän sowie WC und Cr₂C₃-Bereiche in einer NiCr-Matrix sowie NbC und Ni homogen verteilt sind. Die Porösität liegt bei ca. 1%. Die gröberen, hellen Bereiche entsprechend Wolframcarbid, die sehr flachen, ebenfalls hellen Bereiche entsprechen Molybdän, die mittelgrauen Nickel und die dunkelgrauen Cr₂C₃ bzw. den FeCr-haltigen Phasen.

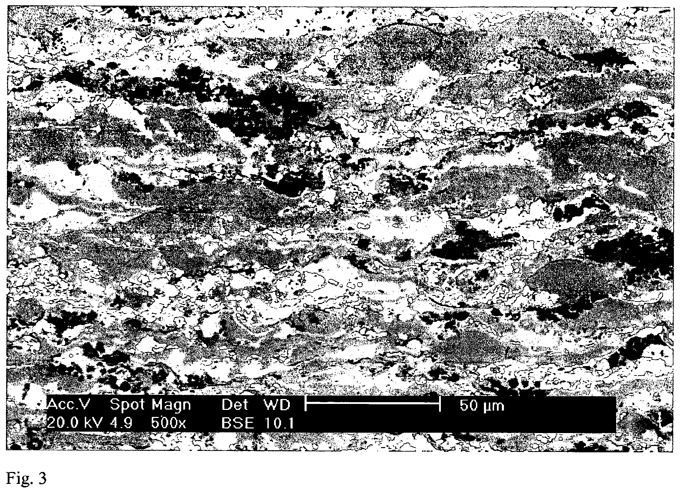

Aus Fig. 3 wird anhand der größeren groben und hellen Bereiche (entsprechen Wolframcarbid) ersichtlich, dass eine Erhöhung des Gehalts an FeCr-Basis + WC/Cr₂C₃-NiCr, zu einer Erhöhung der Karbidkonzentration in der Verschleißschutzschicht führt.

Des Weiteren wurden außermotorische Verschleiß- und Brandspurtests durchgeführt. Dazu wurde ein Segment eines beschichteten Gleitelements in eine Halterung fixiert und mit einer konstanten Kraft und Geschwindigkeit oszillierend über einen Gegenkörper in einem Ölbad bewegt. Die Ergebnisse sind in Fig. 4 und Fig. 5 gezeigt.

Aus der Fig. 4 ist ersichtlich, dass durch Verwendung der erfindungsgemäßen Verschleißschutzschicht mit einer gegenüber der aus dem Stand der Technik bekannten Schutzschicht veränderten Zusammensetzung eine erhebliche Verbesserung des Verschleißwiderstands erreicht werden konnte, was zu einer Reduzierung des Ring- und Zylinderlaufbahnverschleißes um über 90 % führte.

Ebenfalls wurde das Brandspurverhalten untersucht. Dazu wird prinzipiell der gleiche Versuchsaufbau wie für die Verschleißprüfung verwendet, wobei jedoch ein Mangelschmierzustand erzeugt und die Last in konstanten Zeitintervallen erhöht wird. Die Messung wird abgebrochen, sobald der Reibwert > 0,3 betrug. Wie aus Fig. 5 ersichtlich zeigt die erfindungsgemäße Variante TS-V2 ein gegenüber der Variante TS-V1 verbessertes Brandspurverhalten. Ohne an eine Theorie gebunden zu sein wird gegenwärtig davon ausgegangen, dass dies auf die dichtere Schicht, verursacht durch die HVOF-Technologie in Kombination mit dem niedrigen Schmelzpunkt des Ni-Cr-B-Si-Anteils, dem erhöhten Karbidanteil sowie dem immer noch vorhandenem Molybdän in den HVOF Schichten zurückzuführen ist.

In den außermotorischen Untersuchungen wurde damit festgestellt, dass die erfindungsgemäßen Beschichtungen für Kolbenringe hinsichtlich Verschleiß und Brandspurverhalten besser sind als die derzeitigen PVD-CrN basierten Beschichtungen (F-M Materialspezifikation GOE242), die in automotiven und Heavy duty Motoren eingesetzt wird.

Aus den Versuchsergebnissen wird deutlich, dass mittels dieses Schichtsystems ein neuer Kolbenringtyp bereitgestellt wurde.

## Patentansprüche

1. Verschleißschutzschicht für Kolbenringe, umfassend:
15-25 Gew.-% Fe,
10-20 Gew.-% W,
20 -30 Gew.-% Cr,
15 -25 Gew.-% Ni,
1-5 Gew.-% Mo,
0,1-0,5 Gew.-% P,
0,01-0,1 Gew.-% B,
0,1 -5 Gew.-% C,
0,1 -2 Gew.-% Si.

2. Verschleißschutzschicht nach Anspruch 1, wobei 15 bis 50 Gew.% Karbide vorhanden sind.

3. Verschleißschutzschicht nach Anspruch 2, wobei folgenden Carbide in den folgenden Mengen jeweils vorhanden sind
WC von 10 -20 Gew.-%, und/oder
Cr₂C₃ von 10 -25 Gew.-%; und/oder
NbC von 5-15 Gew.-%.

4. Verfahren zum Auftragen einer Verschleißschutzschicht nach einem der Ansprüche 1 bis 3, umfassend die Schritte:
(i) Bereitstellen der Inhaltsstoffe in Pulverform, und
(ii) Hochgeschwindigkeits-Flammspritzen (HVOF-Verfahren) der Inhaltstoffe auf ein Substrat.

5. Verfahren nach Anspruch 4, wobei die Partikelgrößen der Elementpulver in einem Bereich von 1 - 80 µm liegen und die Partikelgröße der verwendeten Karbide in einem Bereich von 0,1 - 5 µm.

6. Verfahren nach Anspruch 4 oder 5, wobei die Karbide als agglomerierte und gesinterte Partikel oder als primär ausgeschiedene Karbide vorliegen.

7. Verfahren nach einem der Ansprüche 3 - 6, wobei das Substrat ein Kolbenring ist.

8. Kolbenring, **dadurch gekennzeichnet, dass** der Kolbenring mit einer Verschleißschutzschicht nach einem der Ansprüche 1 bis 3 beschichtet ist.

9. Kolbenring nach Anspruch 8, worin die Schichtdicke der Beschichtung im Bereich von 20-1000 µm liegt.

10. Kolbenring nach Anspruch 8 oder 9, wobei die Härte der Beschichtung im Bereich von 550 - 950 HV 1 liegt.

## Claims

1. Wear-resistant coating for piston rings, comprising:
15-25% by weight Fe,
10-20% by weight W,
20 -30% by weight Cr,
15 -25% by weight Ni,
1-5% by weight Mo,
0.1-0.5% by weight P,
0.01-0.1% by weight B,
0.1-5% by weight C,
0.1-2% by weight Si.

2. Wear-resistant layer according to claim 1, wherein 15 to 50% by weight of carbides are present.

3. Wear-resistant layer according to claim 2, wherein the following carbides are present in the following quantities
WC from 10-20% by weight, and/or
Cr₂C₃ from 10 -25% by weight, and/or
NbC from 5-15% by weight.

4. Method for applying a wear-resistant layer according to any one of claims 1 to 3, comprising the steps of:
(i) providing the ingredients in powder form, and
(ii) high-speed flame spraying (HVOF) of ingredients onto a substrate.

5. Method according to claim 4, wherein the particle sizes of the elemental powders are in a range from 1 to 80 µm, and the particle size of the carbides used is in the range from 0.1 - 5 µm.

6. Method according to claim 4 or 5, wherein the carbides are present as agglomerated and sintered particles or as primary precipitated carbides.

7. Method according to any one of claims 3 to 6, wherein the substrate is a piston ring.

8. Piston ring, **characterized in that** the piston ring is coated with a wear-resistant layer according to any one of claims 1 to 3.

9. Piston ring according to claim 8, wherein the layer thickness of the coating is in the range from 20-1000 µm.

10. Piston ring according to claim 8 or 9, wherein the hardness of the coating is in the range from 550 to 950 HV1.

## Revendications

1. Couche anti-usure pour segments de piston, comprenant :
15 à 25 % en poids de Fe,
10 à 20 % en poids de W,
20 à 30 % en poids de Cr,
15 à 25 % en poids de Ni,
1 à 5 % en poids de Mo,
0,1 à 0,5 en poids de P,
0,01 à 0,1 % en poids de B,
0,1 à 5 % en poids de C,
0,1 à 2 % en poids de Si.

2. Couche anti-usure selon la revendication 1, comprenant 15 à 50 % en poids de carbures.

3. Couche anti-usure selon la revendication 2, comprenant les carbures suivants dans les quantités indiquées ci-après pour chacun d'entre eux
WC de 10 à 20 % en poids, et/ou
Cr₂C₃ de 10 à 25 % en poids; et/ou
NbC de 5 à 15 % en poids.

4. Procédé de dépôt d'une couche anti-usure selon l'une des revendications 1 à 3, comprenant les étapes consistant à :
(i) fournir les ingrédients sous une forme pulvérulente, et
(ii) déposer les ingrédients sur un substrat, en mettant en oeuvre un procédé de projection par flamme supersonique (HVOF).

5. Procédé selon la revendication 4, les tailles de particule des éléments pulvérulents étant comprises entre 1 et 80 µm, et la taille de particule des carbures mis en oeuvre étant comprise entre 0,1 et 5 µm.

6. Procédé selon les revendications 4 ou 5, lesdits carbures se présentant sous forme de particules agglomérées et frittées ou sous forme de carbures issus d'une précipitation primaire.

7. Procédé selon l'une des revendications 3 à 6, ledit substrat étant un segment de piston.

8. Segment de piston, **caractérisé en ce que** ledit segment de piston est revêtu d'une couche anti-usure selon l'une des revendications 1 à 3.

9. Segment de piston selon la revendication 8, l'épaisseur de couche du revêtement étant comprise entre 20 et 1000 µm.

10. Segment de piston selon les revendications 8 ou 9, la dureté dudit revêtement étant comprise entre 550 et 950 HV 1.
